**Europäisches Patentamt**

(19) **European Patent Office**

**Office européen des brevets**

(11) Veröffentlichungsnummer: **0 168 114**
**B1**

(12) **EUROPÄISCHE PATENTSCHRIFT**

(45) Veröffentlichungstag der Patentschrift:
**27.09.89**

(21) Anmeldenummer: **85201108.9**

(22) Anmeldetag: **08.07.85**

(51) Int. Cl.⁴: **G 01 M 11/00**

(54) Verfahren und Vorrichtung zum Messen der Dämpfung an Lichtwellenleitern.

(30) Priorität: **12.07.84 DE 3425671**

(43) Veröffentlichungstag der Anmeldung:
**15.01.86 Patentblatt 86/3**

(45) Bekanntmachung des Hinweises auf die Patenterteilung:
**27.09.89 Patentblatt 89/39**

(84) Benannte Vertragsstaaten:
**DE FR GB**

(56) Entgegenhaltungen:
**DE-A- 2 822 567**
**DE-A- 3 200 825**

**NACHRICHTEN ELEKTRONIK + TELEMATIK, Band 38, Nr. 1, Januar 1984, Seiten 9-10, 12-17, Heidelberg; E. MEIER-ENGELEN "Das Licht in der Glasfaser unter Kontrolle haben"**
**PATENT ABSTRACTS OF JAPAN, Band 4, Nr. 35 (P-3)[517], 25. März 1980; & JP - A - 55 7652 (NIPPON DENSHIN DENWA KOSHA) 19.01.1980**

(73) Patentinhaber: **Philips Patentverwaltung GmbH, Wendenstrasse 35 Postfach 10 51 49, D-2000 Hamburg 1 (DE)**

(84) Benannte Vertragsstaaten: **DE**

(73) Patentinhaber: **N.V. Philips' Gloeilampenfabrieken, Groenewoudseweg 1, NL-5621 BA Eindhoven (NL)**

(84) Benannte Vertragsstaaten: **FR GB**

(72) Erfinder: **Heckmann, Siegfried, Dr., Teutonenstrasse 47, D-5600 Wuppertal 1 (DE)**

(74) Vertreter: **Koch, Ingo, Dr.-Ing. et al, Philips Patentverwaltung GmbH Wendenstrasse 35 Postfach 10 51 49, D-2000 Hamburg 1 (DE)**

ACTORUM AG

## Beschreibung

Die Erfindung bezieht sich auf ein Verfahren zum Messen der Dämpfung an Lichtwellenleitern (LWL) unter Verwendung eines Lichtsenders, aus dem der LWL eingespeist wird, und eines Empfängers, der die am Ende des LWL abgenommene Lichtleistung erfasst, wobei der Sender das Licht in gepulster Form in die LWL einstrahlt und der Empfänger die ankommende Lichtleistung als Mittelwert erfasst.

Zum Messen der Dämpfung von Lichtwellenleitern ist es bekannt, die Ausgangsleistung eines Lichtsenders an der Sendefaser zu messen, dann die zu messende Faser zwischenzuschalten und erneut zu messen. Die sich daraus ergebende Pegeländerung ist ein Mass für die Dämpfung der Faser. Dieses Verfahren lässt sich insbesondere bei der Vermessung von LWL-Einzelleitern und Kabeln vor, während und nach der Fertigung benutzen.

Ein weiteres bekanntes Verfahren ist das sog. cut-back-Verfahren, bei dem die zu vermessende Faser mit der Sendefaser verbunden und die Lichtleistung am Faserende mit einem Systemempfänger bestimmt wird. Dann wird die zu vermessende Faser in der Nähe der Sendefaser durchgeschnitten und die bis zu diesem abgeschnittenen kurzen Stück übertragene Lichtleistung gemessen. Aus der sich ergebenden Pegeldifferenz beider Messungen lässt sich die Faserdämpfung ermitteln (Nachrichten Elektronik Telematik 38 (1984), Heft 1, Seiten 9–10, 12–17).

Will man sehr genaue Messungen haben, dann muss man während der Messung überprüfen, ob sich nicht etwa die Sendeleistung ändert. Insbesondere dann, wenn die beiden Messungen zeitlich versetzt erfolgen, kann es leicht passieren, dass sich die eingespeiste Sendeleistung verändert, so dass die Messergebnisse nicht genau mit den tatsächlichen Werten übereinstimmen.

Man kann nun daran denken, während der Messung der Lichtempfangsleistung den einspeisenden Sender zu überwachen und die Daten per Funk an die Empfangsstelle zu übertragen, wenn der Sender und der Empfänger an auseinanderliegenden Orten, z.B. bei verlegten Kabeln, stehen.

Man könnte parallel zum verlegten und zu vermessenden Kabel auch eine Referenzleitung legen und die beiden Leitungen mit gleicher Energie einspeisen. Kennt man die Dämpfung der Referenzleitung, so lässt sich auch bei schwankender Sendeleistung die Dämpfung des zu vermessenden Kabels gut ermitteln.

Die vorstehend genannten, bekannten oder vorgeschlagenen Verfahren sind entweder im Ergebnis ungenau oder bedingen einen erheblichen Aufwand oder lassen sich unter Umständen überhaupt nicht realisieren, weil z.B. die Referenzleitung auf der zu vermessenden Strecke nicht zusätzlich verlegt werden kann.

Der Erfindung liegt die Aufgabe zugrunde, ein Verfahren und eine Vorrichtung der beschriebenen Art anzugeben, die es ermöglicht, eine sehr genaue Messung der Dämpfung von Lichtwellenleitern durchzuführen und dabei auch Änderungen in der Sendeleistung zu berücksichtigen.

Gemäss der Erfindung wird diese gestellte Aufgabe dadurch gelöst, dass die vom Sender abgestrahlte Lichtleistung unmittelbar im Bereich des Senders erfasst und die Impulslänge unter Erhaltung der mittleren Lichtleistung entsprechend der Änderung der Sendeleistung verändert wird (Pulsfrequenzmodulation) und dass die so kodierte Sendeleistung durch eine dem Empfänger zugeordnete Dekodiereinrichtung erfasst wird.

Vorteilhaft ist es, die eingespeiste Sendeleistung hinter der Einkopplung des Senders in den LWL zu erfassen, weil dadurch Einkoppelverluste eliminiert werden. Durch die erfindungsgemässe Modulation der Sendeleistung wird die mittlere Sendeleistung und damit auch der Mittelwert der empfangenen Leistung nicht verändert.

Unter gepulster mittlerer Leistung ist zu verstehen, dass die gepulste Leistung mit unterschiedlichen Impuls- und dazu passenden gleichartigen Pausenlängen eingespeist wird. Eine bestimmte Impulslänge bzw. ein durch verschiedene Pulslängen, z.B. digital, kodiertes Signal ist dann das Mass für die Sendeleistung. Jede Änderung der Sendeleistung drückt sich in einer Änderung der Impulslängen und zugehöriger Pausenlängen aus. Diese Kodierung lässt sich mit einer Frequenzmodulation vergleichen. Die Demodulation am Empfänger kann wie bei einer Frequenzdemodulation erfolgen.

Der Empfänger wird zweckmässig mit Einrichtungen ausgestattet, die die Sende- und Empfangsleistung erfassen. Sie kann in getrennten Anzeigeelementen zur Anzeige gebracht werden. Vorteilhaft wird man jedoch die empfangene Lichtleistung mit der gesendeten Lichtleistung direkt vergleichen und die sich ergebende Dämpfung des LWL unmittelbar zur Anzeige bringen.

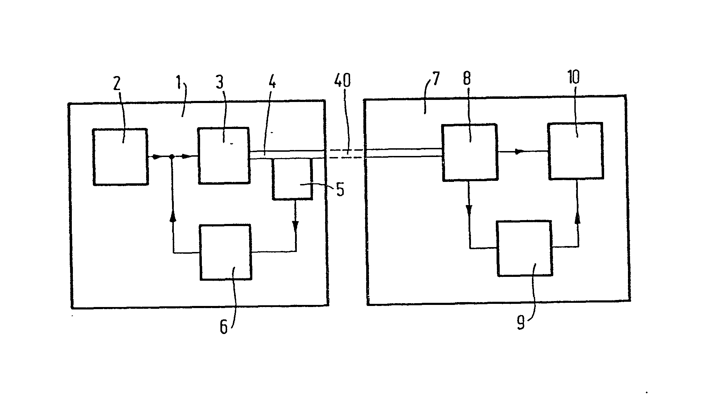

Anhand der Zeichnung wird ein Ausführungsbeispiel der Erfindung beschrieben und die Wirkungsweise erläutert.

Ein optischer Sender 1 besteht aus einer statischen, elektrischen Quelle 2, einem Lichtsender 3, z.B. einer Laserdiode, einer Sendefaser 4, einer Auskoppelvorrichtung 5 mit Fotodetektor und einem Frequenzmodulator 6. Die Auskoppelvorrichtung 5 mit Fotodetektor ist hinter der nicht gezeichneten Kupplung für den zu vermessenden LWL 40 angeordnet. Entsprechend der durch den Fotodetektor erfassten Lichtsendeleistung wird über den Frequenzmodulator 6 die Diode 3 mit entsprechender Pulslänge und damit mit der kodierten Sendeleistung gesteuert. Der Empfänger 7 besteht aus einem Fotodetektor 8, einem Frequenzdemodulator 9 und einer Signalverarbeitungseinheit 10.

Die über die zu vermessende LWL 40 in den Fotodetektor 8 eingespeiste Lichtleistung wird in der Anzeigeeinheit 10 verarbeitet und zur Anzeige gebracht. Gleichzeitig wird die tatsächliche Sendeleistung über den FM-Demodulator ermittelt und ebenfalls der Anzeigeeinheit 10 eingegeben. Damit ist die Einheit 10 in der Lage, die Differenz zwischen Sendeleistung und Empfängerlichtleistung zu ermitteln und als Dämpfung zur Anzeige zu bringen.

## Patentansprüche

1. Verfahren zum Messen der Dämpfung an Lichtwellenleitern (LWL) unter Verwendung eines Lichtsenders, aus dem der LWL eingespeist wird, und eines Empfängers, der die am Ende des LWL abgenommene Lichtleistung erfasst, wobei der Sender das Licht in gepulster Form in die LWL einstrahlt und der Empfänger die ankommende Lichtleistung als Mittelwert erfasst, dadurch gekennzeichnet, dass die vom Sender abgestrahlte Lichtleistung unmittelbar im Bereich des Senders erfasst und die Impulslänge unter Erhaltung der mittleren Lichtleistung entsprechend der Änderung der Sendeleistung verändert wird (Pulsfrequenzmodulation) und dass die so kodierte Sendeleistung durch eine dem Empfänger zugeordnete Dekodiereinrichtung erfasst wird.

2. Verfahren nach Anspruch 1, dadurch gekennzeichnet, dass die eingespeiste Sendeleistung hinter der Einkopplung des Senders in den LWL erfasst wird.

3. Verfahren nach Anspruch 1 und 2, dadurch gekennzeichnet, dass die Sende- und Empfangsleistungen am Empfänger angezeigt werden.

4. Verfahren nach Anspruch 1 und 2, dadurch gekennzeichnet, dass die empfangene Lichtleistung mit der gesendeten Lichtleistung verglichen und die sich ergebende Dämpfung des LWL unmittelbar zur Anzeige gebracht wird.

5. Einrichtung zur Durchführung des Verfahrens nach Anspruch 1 bis 4, gekennzeichnet durch einen gepulsten Lichtsender (3) und einen dem zu vermessenden LWL (40) zugeordneten Fotodetektor (5) sowie einen von diesem gesteuerten Frequenzmodulator (6) zur Kodierung der Sendeleistung in Form veränderlicher Pulslängen, einen dem empfangenden Fotodetektor (8) zugeordneten Demodulator (9) und einer Signalverarbeitungs- und Anzeigeeinheit (10), durch die neben der empfangenen Lichtleistung die Sendeleistung erfasst wird.

6. Einrichtung nach Anspruch 5, dadurch gekennzeichnet, dass die empfängerseitigen Einrichtungen mit einer die Sendeleistung anzeigenden Einrichtung ausgestattet sind.

7. Einrichtung nach Anspruch 5, dadurch gekennzeichnet, dass die Dekodiereinrichtung mit dem Empfänger (7) bzw. der damit verbundenen Anzeige (10) der Empfangsleistung derart gekoppelt ist, dass der Empfänger entsprechend der sich ändernden Sendeleistung nachgesteuert und damit unmittelbar die Dämpfung angezeigt wird.

## Claims

1. A method of measuring the attenuation in optical waveguides (OWG) using a light emitter which feeds energy into the waveguide, and a receiver which receives the light output from the end of the waveguide, the emitter radiating the light in the form of pulses into the waveguide and the receiver receiving the light as an average value, characterized in that the light output power radiated by the emitter is measured in the immediate region of the emitter and the pulse length is changed in accordance with changes in the transmitter output power, while maintaining the average light output (pulse frequency modulation) and in that the thus encoded transmitter power is picked up by a decoding arrangement assigned to the receiver.

2. A method as claimed in Claim 1, characterized in that the transmitter output power fed into the optical fibre is picked up behind the place at which the transmitter is inserted in the waveguide.

3. A method as claimed in Claims 1 and 2, characterized in that the transmitted and received powers are displayed at the receiver.

4. A method as claimed in Claims 1 and 2, characterized in that the received light power is compared to the transmitted light power and the resultant attenuation of the waveguide is directly displayed.

5. A photo-detector for performing the method as claimed in Claims 1 to 4, characterized by a pulsed light emitter (3) and a photodetector (5) assigned to the waveguide (40) to be measured and also a frequency modulator (6) controlled by this photodetector for encoding the transmitter power as varying pulse lengths, a demodulator (9) assigned to the receiving photodetector (8) and a signal processing and display unit (10), by which the transmitted power as well as the received light power is picked up.

6. An arrangement as claimed in Claim 5, characterized in that the arrangements at the receive end are provided with an arrangement displaying the transmitter power.

7. An arrangement as claimed in Claim 5, characterized in that the decoding arrangement is coupled to the receiver (7) and to the display unit (10) of the received power connected thereto respectively, such that the receiver is controlled in dependence on the varying transmitter power and the attenuation is consequently directly displayed.

## Revendications

1. Procédé pour la mesure de l'affaiblissement dans des guides d'ondes lumineuses, utilisant un émetteur optique par lequel le guide d'ondes lumineuses est alimenté et un récepteur qui détermine la puissance optique captée à l'extrémité du guide d'ondes lumineuses, l'émetteur émettant la lumière dans le guide d'ondes lumineuses sous une forme pulsée et le récepteur déterminant la puissance optique arrivante en tant que valeur moyenne, caractérisé en ce que la puissance optique émise par l'émetteur est déterminée directement dans la zone de l'émetteur et a longueur des impulsions est modifiée en fonction de la variation de la puissance d'émission, tout en maintenant la puissance optique moyenne (modulation de fréquence d'impulsions) et que la puissance d'émission ainsi codée est déterminée par un dispositif décodeur associé au récepteur.

2. Procédé suivant la revendication 1, caractérisé en ce que la puissance d'émission injectée est déterminée en aval du couplage de l'émetteur dans le guide d'ondes lumineuses.

3. Procédé suivant les revendications 1 et 2, caractérisé en ce que les puissances d'émission et de réception sont affichées au niveau du récepteur.

4. Procédé suivant les revendications 1 et 2, caractérisé en ce que la puissance optique reçue est comparée à la puissance optique émise et l'affaiblissement du guide d'ondes lumineuses résultant est affiché directement.

5. Dispositif pour l'exécution du procédé suivant les revendications 1 à 4, caractérisé par un émetteur de lumière pulsée (3) et un détecteur photoélectrique (5) associé au guide d'ondes lumineuses (40) à mesurer, ainsi qu'un modulateur de fréquence (6) commandé par ce détecteur pour le codage de la puissance d'émission sous la forme de longueurs d'impulsions variables, un démodulateur (9) associé au détecteur photoélectrique de réception (8) et une unité de traitement de signaux et d'affichage (10) par laquelle la puissance d'émission est déterminée en plus de la puissance optique reçue.

6. Dispositif suivant la revendication 5, caractérisé en ce que les dispositifs situés du côté du récepteur sont équipés d'un dispositif affichant la puissance d'émission.

7. Dispositif suivant la revendication 5, caractérisé en ce que le dispositif décodeur est couplé au récepteur (7) ou au dispositif d'affichage (10) de la puissance d'émission qui y est connecté, d'une manière telle que le récepteur soit asservi en fonction de la puissance d'émission variable et que l'affaiblissement est ainsi affiché directement.